# EUROPÄISCHE PATENTSCHRIFT

(11) **EP 2 247 428 B1**
(45) Veröffentlichungstag und Bekanntmachung des Hinweises auf die Patenterteilung: **07.06.2017**
(21) Anmeldenummer: 09775529.2
(22) Anmeldetag: 14.01.2009
(51) Int. Cl.: B29C 47/74, B29C 47/68, B29C 47/76

(54) **VORRICHTUNG ZUM EXTRUDIEREN VON THERMOPLASTISCHEM KUNSTSTOFFGUT**
DEVICE FOR EXTRUDING A THERMOPLASTIC PRODUCT
DISPOSITIF POUR EXTRUDER UNE MATIÈRE THERMOPLASTIQUE

(30) Priorität: 20.02.2008 AT 2702008
(43) Veröffentlichungstag der Anmeldung: 10.11.2010
(73) Patentinhaber: EREMA Engineering Recycling Maschinen und Anlagen Gesellschaft m.b.H., 4052 Ansfelden (AT)
(72) Erfinder: Schulz, Helmuth, 4020 Linz (AT)
(74) Vertreter: Wildhack & Jellinek
(86) Internationale Anmeldenummer: PCT/AT2009/000009
(87) Internationale Veröffentlichungsnummer: WO 2009/103094

(56) Entgegenhaltungen:
- WO-A-86/02313
- WO-A-99/25528
- AT-A4- 503 014
- AT-B- 400 315
- US-A- 4 697 928
- US-B1- 6 238 733

## Beschreibung

### Technisches Gebiet

Die Erfindung betrifft eine Vorrichtung zum Extrudieren von thermoplastischem Kunststoffgut, mit einer in einem Gehäuse gelagerten Extruderschnecke, die einen zulaufseitigen Plastifizierungsabschnitt, einen einem Austragsabschnitt vorgelagerten Entgasungsabschnitt und zwischen dem Plastifizierungsabschnitt und dem Entgasungsabschnitt eine Durchströmsperre mit einem Schneckenabschnitt mit gegenläufigem Fördergang umfasst, und mit wenigstens einem die Durchströmsperre überbrückenden, ein Schmelzenfilter enthaltenden Strömungskanal.

### Stand der Technik

Mit derartigen Vorrichtungen sollen Kunststoffe, insbesondere Kunststoffabfälle, welche vor einer weiteren Verarbeitung einen Entgasungs- bzw. einem Reinigungsvorgang benötigen, zweckmäßig entgast und aufbereitet werden können. Bei der Aufbereitung von Kunststoffen aus Produktionsabfall bzw. aus bereits in Umlauf gewesenen Kunststoffmaterial ergibt sich durch Bedruckung, Lackierung oder Verschmutzung das Erfordernis diese Kunststoffe vor der Wiederverwendung zu reinigen.

Dazu ist es bekannt (WO 93/04841 A1, AT 400 315 B) den aufzubereitenden Kunststoff in einem Extruder aufzuschmelzen, durch einen Filter zu drücken und vor einer

Weiterverarbeitung bzw. einer Granulierung zu entgasen. Um dabei einen direkten Übertritt von aufgeschmolzenen Kunststoffgut vom Plastifizierungsabschnitt zum Entgasungs- bzw. Austragsabschnitt hin zu vermeiden und zu gewährleisten, dass sämtlicher aufgeschmolzener Kunststoff durch das Schmelzenfilter geleitet wird, ist zwischen dem Plastifizierungsabschnitt und dem Entgasungsabschnitt ein gegenläufiger Fördergang, also eine Art Rückfördergewinde bzw. eine Dichtgewinde vorgesehen, welches eine dem Schneckengewinde vom Plastifizierungsabschnitt, Entgasungsabschnitt und Austragsabschnitt entgegengesetzte Steigung aufweist. Durch dieses bekannte Rückfördergewinde wird ein geringer Anteil an bereits durch den Schmelzenfilter geführtem und gereinigtem Kunststoff wieder in den Plastifizierungsabschnitt rückgefördert, wodurch vermieden werden soll, dass ungefilterte Schmelze unmittelbar unter Umgehung des Schmelzenfilters in den Entgasungs- und den Ausgangsabschnitt gelangen. Die einlauf- und die auslaufseitigen Mündungen des den Schmelzenfilter enthaltenden Strömungskanals sind zur Vermeidung von Toträumen direkt neben dem Rückfördergewinde angeordnet. Damit soll vermieden werden, dass es zu verlängerten Verweilzeiten des Kunststoffgutes in der Vorrichtung und in der Folge zu einer thermischen Schädigung des Kunststoffgutes kommt. Von Nachteil ist bei dieser Vorrichtung insbesondere, dass es sich bei dem gegenläufigen Fördergang um eine dynamische Dichtung handelt, die je nach Drehzahl der Extruderschnecke dicht ist oder nicht. Auch die Viskosität des Kunststoffes ist dabei sehr von Bedeutung, da beispielsweise mit Feuchtigkeit behafteter Kunststoff Dämpfe bildet, die nicht an einem direkten Übertritt vom Plastifizierungsabschnitt in den Entgasungsabschnitt durch den Fördergang hindurch gehindert werden können. Diese Dämpfe sind unter anderem Träger von Schmutzstoffen, die am Filter vorbei in den Entgasungsabschnitt eingetragen werden und den bereits gefilterten Kunststoff wiederum verunreinigen, wodurch keine gleichbleibende Qualität des entgasten und gereinigten Kunststoffgutes gewährleistet werden kann.

Deshalb wurde bereits auch vorgeschlagen (AT 503 014), dass die Extruderschnecke zwischen dem gegenläufigen Fördergang und der auslaufseitigen Mündung des Strömungskanals einen gleichläufigen Fördergang bilden soll und dass das Gehäuse im Übergangsbereich zwischen dem gegenläufigen und dem gleichläufigen Fördergang wenigstens eine Entgasungsöffnung aufweist, gemäß dem Oberbegriff des Anspruchs 1.

Damit können Gasübertritte vom Plastifizierungsabschnitt zum Entgasungsabschnitt durch die Durchströmsperre hindurch vermieden werden und werden somit auch Verunreinigungen der Kunststoffmasse durch die überströmenden Gase ebenso vermieden wie Druckschwankungen in der Anlage. Der vorgenannten Vorrichtung ist allerdings als Nachteil zu eigen, dass die Durchströmsperre mit dem einen gegenläufigen Fördergang aufweisenden Schneckenabschnitt eine erheblich erhöhte Antriebsleistung für die Vorrichtung und zudem einen erhöhten Verschleiß der Vorrichtung bedingt.

### Darstellung der Erfindung

Ausgehend von einem Stand der Technik der eingangs geschilderten Art liegt der Erfindung die Aufgabe zugrunde, die vorgenannten Nachteile zu vermeiden und eine Vorrichtung mit verbessertem Entgasungseffekt zu schaffen, die bei verringerter Antriebsleistung für die Extruderschnecke und bei verringertem Verschleiß an der Durchströmsperre einen direkten Materialübertritt vom Plastifizierungsabschnitt in den Entgasungsabschnitt durch den Fördergang hindurch vermeidet.

Die Erfindung löst die gestellt Aufgabe dadurch, dass dem die Durchströmsperre bildenden Schneckenabschnitt eine verdrehfest im Gehäuse gelagerte, die Schnecke umfassende Hülse zugeordnet ist und dass die Schnecke im Schneckenabschnitt der Durchströmsperre einen gegenüber dem Plastifizierungsabschnitt und vorzugsweise auch gegenüber dem Entgasungsabschnitt kleineren Schneckendurchmesser aufweist, gemäß dem kennzeichnenden Teil des Anspruchs 1.

Die Hülse bzw. eine in das Vorrichtungsgehäuse verdrehfest eingesetzte Buchse bildet zusammen mit dem gegenläufigen Fördergang den Schneckenabschnitt der Durchströmsperre, wobei der verringerte Durchmesser dieses Schneckenabschnittes gegenüber den anschließenden Schneckenabschnitten, nämlich dem Plastifizierungsabschnitt und vorzugsweise auch dem Entgasungsabschnitt für eine erhebliche Reduzierung der erforderlichen Antriebsleistung sorgt, was zudem auch eine Verringerung des Verschleißes aufgrund der geringeren Verlustleistung zufolge hat. Der auftretende Verschleiß tritt somit vornehmlich an der Hülse und nicht am Zylinder auf. Die Hülse kann zu einem Wechsel gemeinsam mit der Schnecke aus dem Zylinder herausgezogen werden.

Ist dabei die größte Weite des Querschnittes der Hülse kleiner bzw. gleich des Außendurchmessers des Plastifizierungsabschnittes und/oder von Entgasungabschnitt und ggf. Austragsabschnitt, so kann die Extruderschnecke in üblicher Weise entlang der Schneckenachse zusammen mit der die Schnecke im Bereich des die Durchströmsperre bildenden Scheckenabschnittes umfassenden Hülse gemeinsam ein- und ausgebaut werden. Die drehfeste Lagerung der Hülse kann durch eine entsprechende Außenform der Hülsen, durch Nuten, Federn, Keile, Schrauben oder dgl. sichergestellt werden.

Mit der Erfindung besteht die Möglichkeit den Durchmesser der Extruderschnecke im Bereich des die Durchströmsperre bildenden Schneckenabschnittes soweit zu reduzieren, dass die zur Entgasung und Austragung erforderlichen Antriebsmomente, mit der gewünschten Sicherheit übertragen werden können.

Kommt als Extruderschnecke eine wie allgemein üblich einteilige Schnecke zum Einsatz, empfiehlt es sich die Hülse in wenigstens einer in Richtung der Schneckenlängsachse verlaufenden Ebene geteilt auszubilden, um eine Montage und Demontage der Hülse an der Förderschnecke bzw. der Förderschnecke im Gehäuse zu ermöglichen.

Zudem bzw. auch alternativ dazu, kann die Extruderschnecke in Schneckenlängsrichtung wenigstens dreiteilig ausgebildet sein, wobei die einzelnen Teile, nämlich der Teil des Plastifizierungsabschnittes, der Teil des Schneckenabschnittes mit der Durchströmsperre und der den Entgasungsabschnitt und den Austragsabschnitt umfassende Teilabschnitt bevorzugsweise entlang der Schneckenachse miteinander verschraubt sind. Die einzelnen Schneckenabschnitte können somit problemlos gesondert gefertigt werden und anschließend nach einem Vormontieren der Hülse auf dem die Durchströmsperre bildenden Schneckenabschnitt miteinander verschraubt werden, womit unter anderem auch eine Kombination verschiedenster Schneckengeometrien problemlos möglich ist. Auch kann ein möglicherweise rascher verschleißendes Rückführgewinde samt Hülse ausgetauscht werden, ohne die gesamte Extruderschnecke neu fertigen zu müssen.

Zur Verbesserung der Entgasungsleistung kann die Extruderschnecke zwischen dem gegenläufigen Fördergang und der auslaufseitigen Mündung des Strömungskanals in an sich bekannter Weise einen gleichläufigen Fördergang bilden, wobei das Gehäuse im Übergangsbereich zwischen dem gegenläufigen und dem gleichläufigen Fördergang vorzugsweise wenigstens eine Entgasungsöffnung aufweist. Zur Verschleißminderung des an den Plastifizierungsabschnitt anschließenden gegenläufigen Fördergangs in Folge von in den Fördergang eindringenden verunreinigten Gasen ist es von Vorteil, wenn der dem Strömungskanal auf der Austrittsseite des Schmelzenfilters durch wenigstens einen Rückführkanal, vorzugsweise über ein Rückschlagventil, zulaufseitig mit dem gegenläufigen Fördergang der Extruderschnecke verbunden ist. Damit kann ein gezielter, geringer Rückstrom an gereinigtem Kunststoff durch den Fördergang hindurch zum Plastifizierungsabschnitt hin sichergestellt und somit ein Eindringen von verunreinigtem Kunststoff in den gegenläufigen Fördergang vermieden werden.

Zur Verbesserung der Entgasungswirkung kann zwischen dem gegenläufigen und dem gleichläufigen Fördergang der Extruderschnecke ein gangloser Entgasungsraum in der Hülse vorgesehen sein, der von der Extruderschnecke und/oder von der Hülse ausgebildet wird. Über die Entgasungsöffnung werden über den gegenläufigen und den gleichläufigen Fördergang in diesen Bereich eindringende Gase einfach aus der Vorrichtung abgeleitet, womit die gewünschte Druckentkopplung gewährleistet ist und ein Übertritt von verunreinigten Gasen sicher vermieden wird.

### Kurze Beschreibung der Zeichnung

In der Zeichnung ist die Erfindung anhand eines schematischen Ausführungsbeispiels, einer im Querschnitt dargestellten erfindungsgemäßen Vorrichtung veranschaulicht. Es zeigen
- Fig. 1: Eine erfindungsgemäße Vorrichtung im teilgeschnittenen Querschnitt und
- Fig. 2: eine Konstruktionsvariante einer erfindungsgemäßen Vorrichtung im teilgeschnittenen Querschnitt.

### Weg zur Ausführung der Erfindung

Eine Vorrichtung zum Extrudieren von thermoplastischem Kunststoffgut umfasst eine in einem Gehäuse 1 gelagerte Extruderschnecke 2, die einen zulaufseitigen Plastifizierungsabschnitt P und einen einem angedeuteten Austragsabschnitt A vorgelagerten Entgasungsabschnitt E aufweist. Zwischen dem Plastifizierungsabschnitt P und dem Entgasungsabschnitt E ist ein eine Durchströmsperre S mit einem Schneckenabschnitt mit gegenläufigem Fördergang 3 bildender Schneckenabschnitt vorgesehen. Zudem gehört dem Gehäuse 1 wenigstens ein die Durchströmsperre S überbrückender, ein Schmelzenfilter 4 enthaltender Strömungskanal 5 zu. Um die Antriebsleistung und den Verschleiß der Extruderschnecke 2 zu verringern, ist dem die Durchströmsperre S bildenden Schneckenabschnitt eine verdrehfest im Gehäuse 1 gelagerte, die Schnecke 6 umfassende Hülse 7 zugeordnet und weist die Schnecke 6 im Schneckenabschnitt der Durchströmsperre S einen gegenüber dem Plastifizierungsabschnitt P und gegenüber dem Entgasungsabschnitt E kleineren Schneckendurchmesser auf. Die Verdrehsicherung der Hülse 7 erfolgt im dargestellten Ausführungsbeispiel durch eine Sicherungsschraube 8.

Zudem ist die größte Weite des Querschnittes der Hülse 7 gleich dem Außendurchmesser der Schnecke im Plastifizierungsabschnitt P und im Entgasungsabschnitt E, womit die Extruderschnecke 2 problemlos entlang der Extruderschneckenachse 9 zusammen mit der Hülse 7 ein- bzw. ausgebaut werden kann.

Zur Ermöglichung der Montage bzw. um bei einem Verschleiß der Durchströmsperre S lediglich diese auswechseln zu müssen, ist die Extruderschnecke 2 in Schneckenlängsrichtung dreiteilig ausgebildet. Die drei Teile sind der dem Plastifizierungsabschnitt P zugeordnete Teil 10, die Schnecke 6, die der Durchströmsperre S zugeordnet ist und der dem Entgasungsabschnitt E und dem Austragsabschnitt A zugeordnete Teil 11 der Extruderschnecke 2. Die einzelnen drei Teile sind miteinander unter Zwischenlage von entsprechenden Beilagscheiben 12 verschraubt. Zum Trennen der drei Teile kann es bei festgefressenen Gewinden erforderlich sein, die Teile im Bereich der Scheiben 12 aufzuschneiden bzw. aufzusägen.

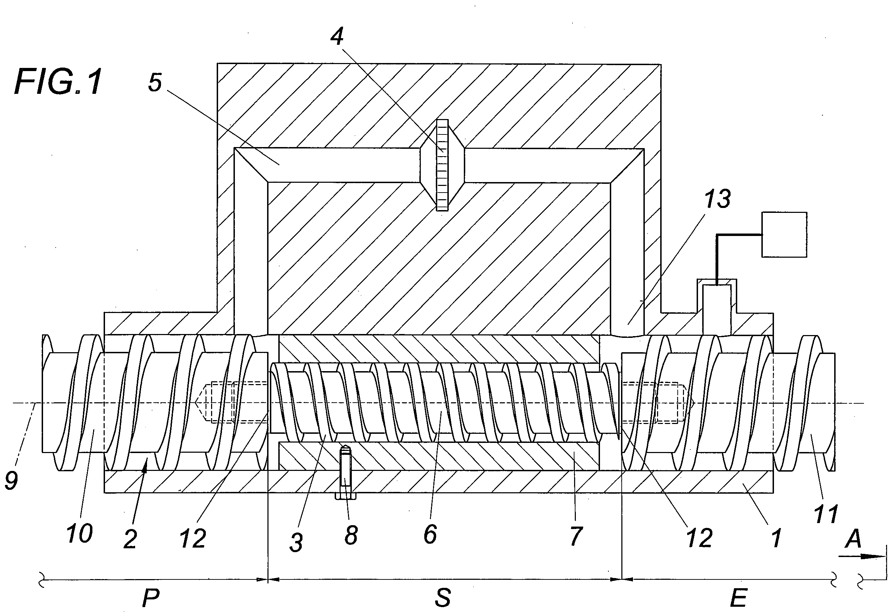

Zwischen dem gegenläufigen Fördergang 3 und der auslaufseitigen Mündung 13 des Strömungskanals 5 in den Entgasungsabschnitt E bildet die Schnecke 6 beim Ausführungsbeispiel nach Fig. 1 einen gleichläufigen Fördergang 14 aus. Zudem ist der Strömungskanal 5 auf der Austrittsseite des Schmelzenfilters 4 durch einen Rückführkanal 15, über ein Rückschlagventil 16 zulaufseitig mit dem gegenläufigen Fördergang 3 der Extruderschnecke 2 verbunden. Dazu ist in der Hülse 7 eine radiale Öffnung 17 vorgesehen. Des weiteren ist zwischen dem gegenläufigen Fördergang 3 und dem gleichläufigen Fördergang 14 ein gangloser Entgasungsraum 18 vorgesehen, der von der Schnecke 6 ausgebildet wird und der über eine Entgasungsöffnung (19) in der Hülse 7 aus der Vorrichtung mündet.

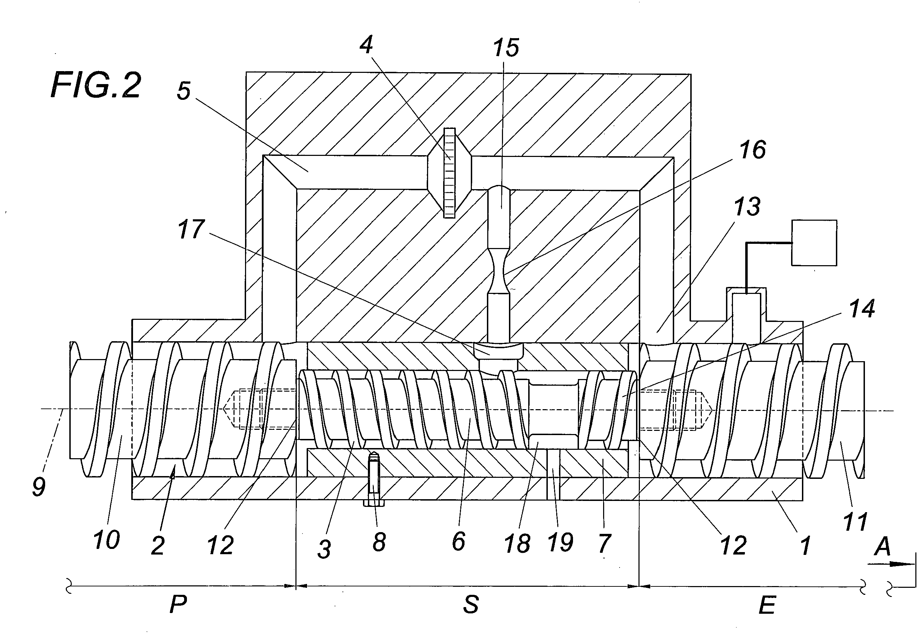

Als weitere Alternative könnte beim Ausführungsbeispiel nach Fig. 1 in gleicher Weise ein Rückführkanal 15 vorgesehen sein, wobei die auslaufseitige Mündung 13 des Strömungskanals 5 vorzugsweise in gleicher Art in den dem Entgasungsabschnitt E zugeordneten Teil 11 der Extruderschnecke 2, wie in Fig. 2 ausmündet.

## Patentansprüche

1. Vorrichtung zum Extrudieren von thermoplastischem Kunststoffgut, mit einer in einem Gehäuse (1) gelagerten Extruderschnecke (2), die einen zulaufseitigen Plastifizierungsabschnitt (P), einen einem Austragsabschnitt (A) vorgelagerten Entgasungsabschnitt (E) und zwischen dem Plastifizierungsabschnitt (P) und dem Entgasungsabschnitt (E) eine Durchströmsperre (S) mit einem Schneckenabschnitt mit gegenläufigem Fördergang (3) umfasst, und mit wenigstens einem die Durchströmsperre (S) überbrückenden, ein Schmelzenfilter (4) enthaltenden Strömungskanal (5), **dadurch gekennzeichnet, dass** dem die Durchströmsperre (S) bildenden Schneckenabschnitt eine verdrehfest im Gehäuse (1) gelagerte, die Schnecke (6) umfassende Hülse (7) zugeordnet ist und dass die Schnecke (6) im Schneckenabschnitt der Durchströmsperre (S) einen gegenüber dem Plastifizierungsabschnitt (P) und vorzugsweise gegenüber dem Entgasungsabschnitt (E) kleineren Schneckendurchmesser aufweist.

2. Vorrichtung nach Anspruch 1, **dadurch gekennzeichnet, dass** die größte Weite des Querschnittes der Hülse (7) kleiner bzw. gleich dem Außendurchmesser der Schnecke im Plastifizierungsabschnitt (P) und/oder des Entgasungsabschnittes (E) ist.

3. Vorrichtung nach Anspruch 1 oder 2, **dadurch gekennzeichnet, dass** die Hülse (7) in wenigstens einer in Richtung der Schneckenlängsachse (9) verlaufenden Ebene geteilt ausgebildet ist.

4. Vorrichtung nach einem der Ansprüche 1 bis 3, **dadurch gekennzeichnet, dass** die Extruderschnecke (2) in Schneckenlängsrichtung dreiteilig ausgebildet ist, wobei die einzelnen Teile, nämlich der Plastifizierungsabschnitt (P), der Schneckenabschnitt mit der Durchströmsperre (S) und der den Entgasungsabschnitt (E) und den Austragsabschnitt (A) umfassende Abschnitt vorzugsweise entlang der Schneckenachse (9) miteinander verschraubt sind.

5. Vorrichtung nach einem der Ansprüche 1 bis 4, **dadurch gekennzeichnet, dass** der Strömungskanal (5) auf der Austrittsseite des Schmelzenfilters (4) durch wenigstens einen Rückführkanal (15), vorzugsweise über ein Rückschlagventil (16), zulaufseitig mit dem gegenläufigen Fördergang (2) der Extruderschnecke (2) über eine radiale Öffnung der Hülse (7) verbunden ist.

6. Vorrichtung nach einem der Ansprüche 1 bis 5, **dadurch gekennzeichnet, dass** die Extruderschnecke zwischen dem gegenläufigen Fördergang (3) und der auslaufseitigen Mündung des Strömungskanals zum Entgasungsabschnitt hin einen gleichläufigen Fördergang bildet und dass die Hülse (7) im Übergangsbereich zwischen dem gegenläufigen und dem gleichläufigen Fördergang wenigstens eine Entgasungsöffnung (19) aufweist.

7. Vorrichtung nach einem der Ansprüche 1 bis 6, **dadurch gekennzeichnet, dass** zwischen dem gegenläufigen und dem gleichläufigen Fördergang der Extruderschnecke (2) ein gangloser Entgasungsraum (18) vorgesehen ist, der von der Extruderschnecke (2) und/oder der Hülse (7) ausgebildet wird.

## Claims

1. A device for extruding a thermoplastic plastic product, having an extruder screw (2) that is mounted in a housing (1), which screw comprises a plasticizing section (P) on the supply side, a degasification section (E) mounted upstream of a discharge section (A) and a flow arrester (S) between the plasticizing section (P) and the degasification section (E), said flow arrester having a screw section with a counter-rotating conveyor path (3), and at least one flow channel (5) that bridges the flow arrester (S) and contains a melt filter (4), **characterized in that** a sleeve (7), which encompasses the screw (6) and is mounted in the housing (1) in a rotationally fixed manner, is allocated to the screw section that forms the flow arrester (S) and that the screw (6) in the screw section of the flow arrester (S) has a smaller screw diameter in relation to the plasticizing section (P) and preferably in relation to the degasification section (E).

2. A device according to Claim 1, **characterized in that** the largest width of the cross section of the sleeve (7) is less than or equal to the outer diameter of the screw in the plasticizing section (P) and/or of the degasification section (E ).

3. A device according to Claim 1 or 2, **characterized in that** the sleeve (7) is of split design in at least one plane running in the direction of the screw longitudinal axis (9).

4. A device according to any one of Claims 1 to 3, **characterized in that** the extruder screw (2) is designed in three parts in the screw longitudinal direction, wherein the individual parts, namely the plasticizing section (P), the screw section with the flow arrester (S) and the section comprising the degasification section (E) and the discharge section (A) are screwed together with each other preferably along the screw axis (9).

5. A device according to any one of Claims 1 to 4, **characterized in that** the flow channel (5) on the outlet side of the melt filter (4) through the at least one return channel (15), preferably via a check valve (16), is connected on the inflow side with the counter-rotating conveyor passage (2) of the extruder screw (2) via a radial opening of the sleeve (7).

6. A device according to any one of Claims 1 to 5, **characterized in that** the extruder screw between the counter-rotating conveyor passage (3) and the outlet-side opening of the flow channel to the degasification section forms a counter-rotating conveyor passage and that the sleeve (7) has at least one degasification opening (19) in the transitional region between the counter-rotating and the co-rotating conveyor passage.

7. A device according to any one of Claims 1 to 6, **characterized in that** between the counter-rotating and the co-rotating conveyor passage of the extruder screw (2) a ductless degasification space (18) is provided, which is formed by the extruder screw (2) and/or the sleeve (7).

## Revendications

1. Dispositif pour extruder un produit thermoplastique, avec une vis d'extrudeuse (2) qui est supportée dans un corps (1) et qui comprend un tronçon de plastification (P) côté alimentation, un tronçon de dégazage (E) supporté en amont d'un tronçon de décharge (A) et, entre le tronçon de plastification (P) et le tronçon de dégazage (E), un blocage du passage (S) avec un tronçon de vis avec une spire d'acheminement (3) en sens opposé, et avec au moins un canal d'écoulement (5) contenant un filtre (4) pour la masse fondue et enjambant le blocage du passage (S), **caractérisé en ce qu'**un manchon (7) comprenant la vis (6) et supporté de façon bloquée en rotation dans le corps (1) est affecté au tronçon de vis formant le blocage du passage (S), et **en ce que**, dans le tronçon de vis du blocage du passage (S), la vis (6) présente un diamètre de vis réduit par rapport au tronçon de plastification (P) et de préférence par rapport au tronçon de dégazage (E).

2. Dispositif selon la revendication 1, **caractérisé en ce que** la plus grande largeur de la section transversale du manchon (7) est inférieure ou respectivement égale au diamètre extérieur de la vis dans le tronçon de plastification (P) et/ou du tronçon de dégazage (E).

3. Dispositif selon la revendication 1 ou 2, **caractérisé en ce que**, dans au moins un plan s'étendant en direction de l'axe longitudinal de vis (9), le manchon (7) est constitué de façon divisée.

4. Dispositif selon l'une des revendications 1 à 3, **caractérisé en ce que**, dans la direction longitudinale de vis, la vis d'extrudeuse (2) est constituée en trois parties, les différentes parties, notamment le tronçon de plastification (P), le tronçon de vis avec le blocage du passage (S) et le tronçon comprenant le tronçon de dégazage (E) et le tronçon de décharge (A), sont assemblées entre elles par vissage de préférence le long de l'axe de vis (9).

5. Dispositif selon l'une des revendications 1 à 4, **caractérisé en ce que**, sur le côté sortie du filtre (4) pour la masse fondue, le canal d'écoulement (5) est, par au moins un canal de retour (15), de préférence par le biais d'un clapet antiretour (16), raccordé côté alimentation à la spire d'acheminement (2), en sens opposé, de la vis d'extrudeuse (2) par le biais d'une ouverture radiale du manchon (7).

6. Dispositif selon l'une des revendications 1 à 5, **caractérisé en ce que**, entre la spire d'acheminement (3) en sens opposé et l'embouchure, côté évacuation, du canal d'écoulement vers le tronçon de dégazage, la vis d'extrudeuse forme une spire d'acheminement de même sens, et **en ce que**, dans la zone de transition entre la spire d'acheminement de sens opposé et la spire d'acheminement de même sens, le manchon (7) présente au moins une ouverture de dégazage (19).

7. Dispositif selon l'une des revendications 1 à 6, **caractérisé en ce que**, entre la spire d'acheminement de sens opposé et la spire d'acheminement de même sens de la vis d'extrudeuse (2), il est prévu un espace de dégazage (18) sans spire qui est constitué par la vis d'extrudeuse (2) et/ou par le manchon (7).
